# EUROPEAN PATENT APPLICATION

(11) **EP 1 408 310 A1**
(43) Date of publication of application: **14.04.2004**
(21) Application number: 03022933.0
(22) Date of filing: 09.10.2003
(51) Int. Cl.: G01D 5/20

(54) **Disconnection protection structure of a rotary transformer-type resolver**

(30) Priority: 09.10.2002 JP 2002296458
(71) Applicant: Minebea Co., Ltd., Nagano-Ken 389-0293 (JP)
(72) Inventor: Miya, Yasukazu, Minebea Co., Ltd., Tokyo (JP); Otsuka, Makoto, Minebea Co., Ltd., Tokyo (JP)
(74) Representative: Konle, Tilmar, Dipl.-Ing.

(57) **Abstract**

A disconnect protection structure for a rotary transformer type resolver includes insulating tube units (611, 612, 613) that house a crossover (60) connecting a rotary transformer output winding (65) and resolver excitation windings (64). A left end (611a) of the protection tube (611) and a right end 613b of the protection tube (613) are secured to the crossover (60). Ends of the insulating tube units (611, 612, 613) other than the secured ends are not secured, and a gap is provided between adjacent insulating tube units. As a result, the unsecured ends are capable of absorbing a force that would otherwise cause the crossover (60) to disconnect from the rotary transformer output winding (65) and/or the resolver excitation windings (64) when the protection tube units (611, 612, 613) and the crossover (60) thermally expand or contract.

## Description

### CROSS REFERENCE TO RELATED APPLICATION

The present application is related to, and claims priority from, Japanese patent application no. 2002-296458, filed on October 9, 2002, the contents of which are incorporated herein by reference.

### BACKGROUND

The present invention relates to rotary transformer type resolvers, and particularly to a rotary transformer type resolver with a disconnect protection structure.

In a conventional rotary transformer type resolver, the rotary transformer rotation side coil and the resolver rotor are typically secured as a unit to the rotary shaft, and the rotation side coil and the resolver rotor coils are respectively bound by cord and secured by a compound such as a conventional varnish used for impregnation processing of the rotation side coil and the resolver rotor coils.

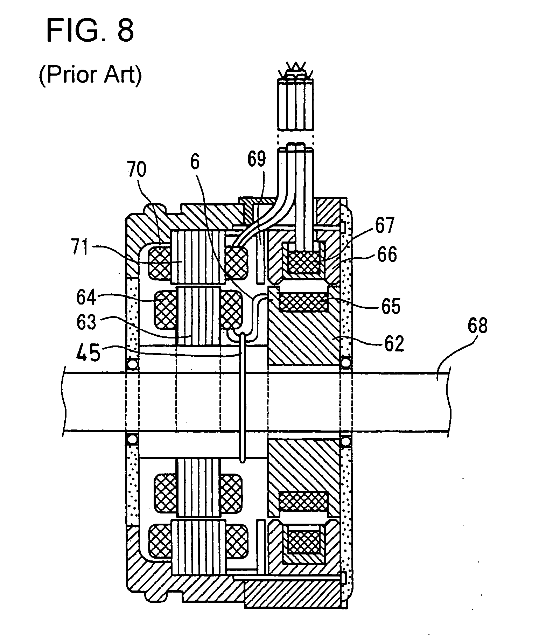

In addition, a conventional resolver; such as that disclosed in Japanese unexamined patent publication number S63-318725 and shown in FIG. 8 of the present application, also includes a wire, or crossover, that connects respective lead wires of the rotary transformer output winding 65 and the resolver excitation windings 64. The crossover is not visible in FIG. 8 because it is housed within an insulating tube 6 and is secured to the rotary shaft 68 along with the insulating tube 6 by a cord 45. Because the diameters of the resolver excitation windings 64 forming the crossover are small, the crossover is housed with the insulating tube 6 to enable the resolver excitation windings 64 to be more easily secured by the cord 45 to the rotary shaft 68. In addition, the insulating tube 6 protects soldered portions of the crossover from exposure to ambient resolver operating conditions, thereby improving overall resolver reliability.

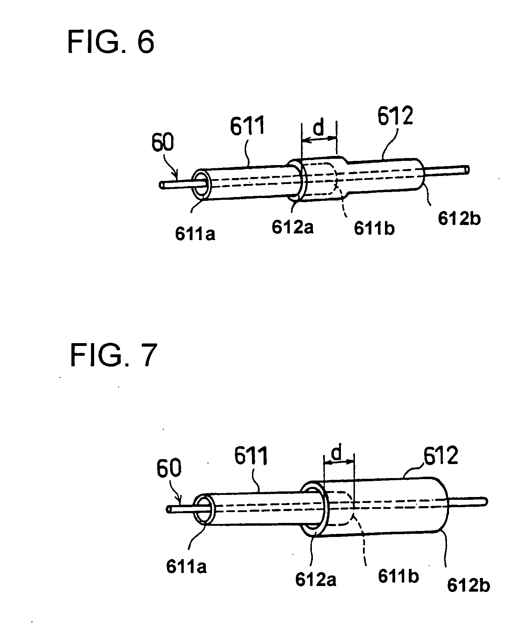

In the resolver shown in FIG. 7, the insulating tube 6 is usually formed from a vinyl tube having a first thermal expansion coefficient, and the crossover is usually formed from a copper wire having a second thermal expansion coefficient less than the first thermal coefficient of the vinyl tube. As both ends of the insulating tube 6 are typically obstructed by varnish used for impregnation processing of the resolver excitation windings 64 and the rotary transformer output winding 65, during resolver operation, a force equal to or greater than a crossover disconnect stress may be applied to the crossover depending on the difference in the thermal expansion coefficients of the insulating tube 6 and the crossover. In a narrow, compact resolver in which the diameter of the resolver excitation windings forming the crossover is 0.1 mm or less, such a force when applied becomes problematic. As a result, in a resolver used in an environment in which operating temperatures are severe, the crossover has a tendency to disconnect as a result of expansion and contraction of the insulating tube 6 and the crossover, thereby resulting in resolver malfunction and decreased reliability.

### SUMMARY OF THE INVENTION

In view of the above, a disconnect protection structure for a rotary transformer type resolver is provided that absorbs the difference between the thermal expansion coefficients of a crossover and an insulating tube that houses the crossover. The disconnect protection structure may be formed by separating the insulating tube into a plurality of insulating tube units. The leftmost and rightmost units of the insulating tube are respectively secured to the crossover, and the other insulating tube units are not secured to the crossover.

Alternatively, the disconnect protection structure may be realized by separating the insulating tube into a plurality of insulating tube units, where end units thereof may mutually overlap, or by forming a cutout portion in the insulating tube that absorbs the difference in the thermal expansion coefficients of the crossover and the insulating tube.

The disconnect protection structure of the present invention prevents the crossover from being disconnected from the lead wires of the rotary transformer output winding and the resolver excitation windings, thereby resulting in higher resolver reliability.

### BRIEF DESCRIPTION OF THE DRAWINGS

The accompanying figures, in which like reference numerals refer to identical or functionally similar elements and which together with the detailed description below are incorporated in and form part of the specification, serve to further illustrate preferred embodiments and to explain various principles and advantages all in accordance with the present invention.

FIG. 1 is a side elevation view of a rotary transformer type resolver that includes a disconnect protection structure according to a first embodiment of the present invention.

FIG. 2 is a perspective view of a portion of the disconnect protection structure of FIG. 1 including an insulating tube in which a crossover is housed.

FIG. 3 is a cross-sectional view of the portion of the insulating tube of FIG. 2 in which a crossover is housed and in which both ends thereof are obstructed by varnish.

FIG. 4 is an enlarged perspective view of the disconnect protection structure shown in FIG. 1.

FIG. 5 is a perspective view of a disconnect protection structure according to a second embodiment of the present invention.

FIG. 6 is a perspective view of a disconnect protection structure according to a third embodiment of the present invention.

FIG. 7 is a perspective view of a disconnect protection structure according to a fourth embodiment of the present invention.

FIG. 8 is cross sectional side elevation view of a prior art resolver.

### DETAILED DESCRIPTION OF THE PREFERRED EMBODIMENTS

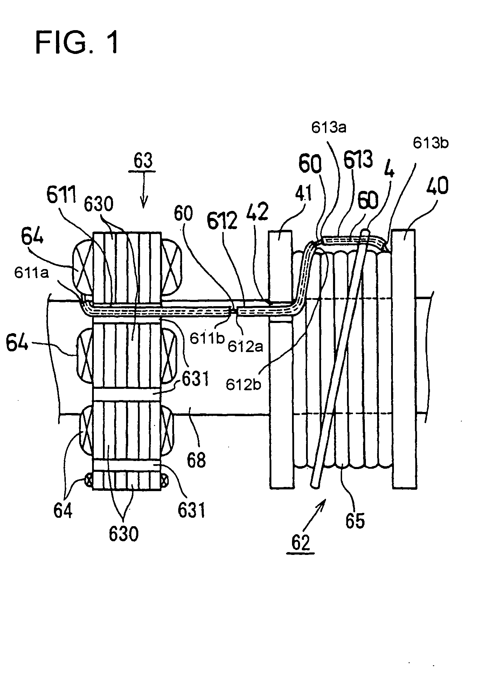

FIG. 1 shows a rotary transformer type resolver that includes a disconnect protection structure according to a first embodiment of the present invention. It should be noted that, throughout this description, components identical to those in FIG. 8 are identified by like reference numbers and are like in structure and function. Further explanation of these like components has therefore been omitted.

The rotary transformer type resolver includes a disconnect protection structure that is formed from a protection tube (hereunder referred to as an insulating tube). The insulating tube is made from an insulating material, such as vinyl, protects a crossover 60 and is configured by a plurality of insulating tube units, such as the exemplary insulating tube units 611, 612, 613 shown in FIG. 1.

A rotary transformer output winding 65 is wound on an inner core 62, and a right end 613b of the insulating tube 613 is secured by means of a cord 4 to the rotary transformer output winding 65. Note that, instead of the cord 4, varnish applied during impregnation processing may be used to secure the rotary transformer output winding 65 as well as the right end 613b of the insulating tube 613 to the rotary transformer output winding 65.

The inner core 62 and the resolver rotor 63 are respectively secured to a rotary shaft 68. A cutout portion 42 through which the crossover 60 passes is formed at a flange portion 41 of the inner core 62 that is nearest the resolver rotor 63. The crossover 60 is housed within and passes through the insulating tube units 611, 612, 613 respectively, and therefore is protected between the inner core 62 and the resolver rotor 63.

Resolver excitation windings 64 are respectively wound on a plurality of rotor magnets 630 at the resolver rotor 63. Inter-magnet spaces 631 are formed between the rotor magnets 630. The insulating tube unit 611 is set into the inter-magnet space 631 in alignment with the cutout portion 42, and the left end 611a of the insulating tube unit 611 is secured to the resolver rotor 63 along with the resolver excitation windings 64 by of varnish applied during impregnation processing. The ends of the insulating tube units 611, 612, 613 other than the left end 611a of the insulating tube unit 611 and the right end 613b of the insulating tube unit 613 are not secured to the crossover 60. As is discussed below, the spaces between the respective insulating tube units 611, 612, 613 are formed to absorb the difference in the thermal expansion coefficients between of crossover 60 and the respective insulating tube units 611, 612, 613. As a result of the insulating tube unit 612 being supported by the cutout portion 42 and the insulating tube unit 611 being supported by the inter-magnet space 631, the crossover 60 does not become separated from the rotary shaft 68 due to rotation, vibration and the like of the resolver rotor 63.

In addition, if the space between the inner core 62 and the resolver rotor 63 is large, one or more of the insulating tube units 611, 612, 613 may be secured to the rotary shaft 68 by means of a cord or a bonding agent at any location of the rotary shaft 68. In such cases, in order to prevent disconnect stress from being applied to the crossover 60, the restraining force of the cord 4 on the insulating tube unit 613 may be loosened, or the bonding agent, such as varnish used for impregnation processing, may be applied such that only the insulating tube unit 612 and/or the insulating tube unit 613 is bonded to the rotary shaft 68.

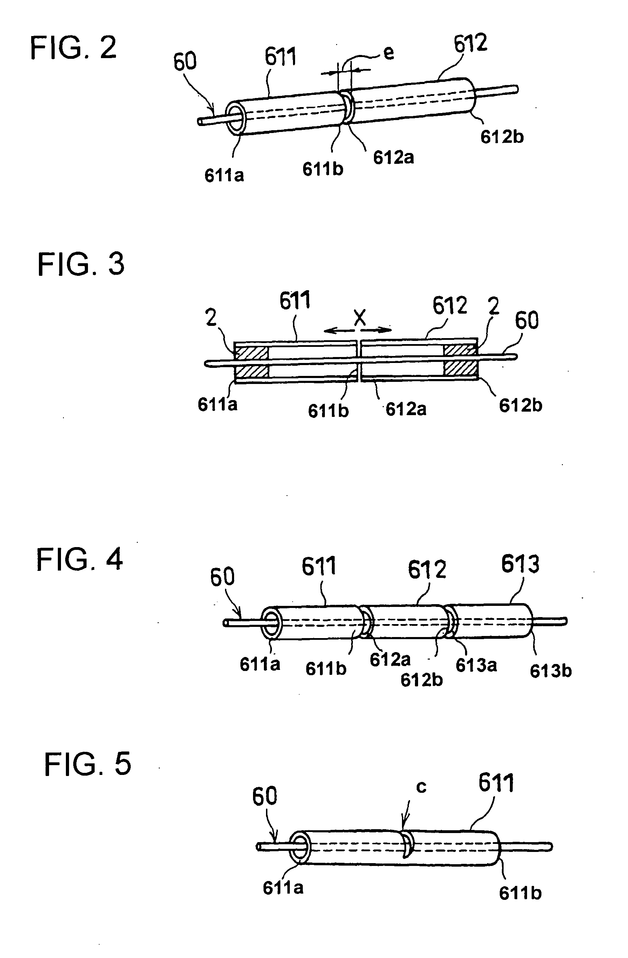

FIGs. 2 and 3 illustrate a portion of the insulating tube of FIG. 1, namely, insulating tube units 611, 612. As shown in FIG. 3, the left end 611a of the insulating tube 611 and the right end 612b of the insulating tube 612 are secured to the crossover 60 by varnish 2 applied during impregnation processing on the rotary transformer output winding 65 and the resolver excitation windings 64. In addition, the right end 611b of the insulating tube 611 and the left end 612a of the insulating tube 612 are not secured to the crossover 60, but rather are spaced apart such that a gap e is provided therebetween so that a force in the X direction that is equal to or greater than a crossover disconnect stress is not applied to the crossover 60 when the insulating tube units 611, 612 and the crossover 60 thermally expand or contract in response to temperature fluctuation. The gap e is appropriately determined according to, for example, the thickness of the crossover 60, the length of the insulating tube units 611, 612 and the temperature conditions under which the resolver is to be used.

As mentioned briefly above, the number of insulating tube units may vary according to a particular resolver application, and therefore need not be three as shown in FIG. 4. Regardless of the number of insulating tube units, the outermost ends of each end insulating tube unit, such as the left end 611a of the insulating tube unit 611 and the second end right end 613b of the insulating tube 613 in FIG. 1, are secured to the crossover 60 by varnish applied during impregnation processing. In addition, ends of insulating tube units other than the outermost ends of each end insulating tube unit such as, for example, the right end 611b of the insulating tube 611 and the left end 613a of the insulating tube 613, are not secured to the crossover 60, and a gap such as the gap e in FIG. 2 is formed between adjacent insulating tube units. It should be appreciated that the method of securing the ends of the outer insulating tube units to the crossover 60 may be other than the varnish applied during impregnation processing. For example, the ends of the outer insulating tube units may be secured to the crossover by a cord, such as the cord 4 in FIG. 1.

FIG. 5 shows a disconnect protection structure according to the second embodiment of the present invention in which a cutout portion, such as the cutout portion c, is formed in an otherwise unitary insulating tube 611. The cutout portion c absorbs the difference between respective thermal expansion coefficients of the crossover 60 and the insulating tube 611. In addition to the cutout portion c, one or more additional cutout portions may also be formed based on, for example, the thickness of the crossover 60, the length of the insulating tube 611 and the temperature conditions under which the resolver is to be used, to inhibit a force greater than or equal to a disconnect stress from being applied to the crossover 60.

When the insulating tube 611 must be bent between, for example, the resolver rotor 63 and the rotor magnets 630, the cutout portion c is located at the bending point, or elbow, formed in the insulating tube 611 in the disconnect stress absorbing direction. The cutout portion c is effective not only because it can be formed at the elbow of a bent insulating tube to absorb disconnect stress caused by the difference between respective thermal expansion coefficients of the crossover 60 and the insulating tube 611 that would otherwise be applied to the elbow, but also because it enables a unitary insulating tube 611 to be used, thereby simplifying the overall structure of the disconnect protection structure and simplifying the resolver assembly process due to the ease of passing the crossover 60 through the unitary insulating tube 611.

FIG. 6 and FIG. 7 respectively show third and fourth embodiments of the disconnect protection structure of the present invention in which the diameters of the plurality of insulating tube units differ, and the adjacent ends thereof may be formed so that they slidably engage with each other. Specifically, the left end 611a of the insulating tube 611 and the right end 612b of the insulating tube 612 are secured to the crossover 60 by varnish (not shown) applied during impregnation processing. The right end 611b of the insulating tube 611 and the left end 612a of the insulating tube 612 are not secured to the crossover 60, and a length d of the insulating tube 611 that is set into insulating tube 612 is determined so that the engagement force of the two insulating tube units 611, 612 enables the two insulating tube units 611, 612 to shift relative to one another according to temperature changes to ensure that the crossover 60 is not disconnected due to the difference in thermal expansion coefficients of the crossover 60 and the insulating tube 611.

More specifically, the length d is determined according to, for example, the thickness of the crossover 60, the respective lengths of the insulating tubes 611, 612, resolver operating temperatures and the like. In the embodiment shown in FIG. 6, d has a maximum possible value, as the portion of the insulating tube unit 612 into which the insulating tube unit 611 is set has a first diameter that defines the distance d and then tapers to a second narrower diameter. Preferably, d will remain greater than 0 under resolver operating temperatures. Specifically, since d > 0 under resolver operating temperatures, the disconnect protection structures according to the embodiments in FIG. 6 and FIG. 7 exhibit improved dielectric strength without exposing the crossover 60 to ambient operating conditions as well as improved performance with respect to moisture resistance.

It should be noted at this point that, regarding the disconnect protection structure in FIG. 6, the left end 612a of the insulating tube 612 is larger in diameter than the right end 611b of the insulating tube 611. However, the disconnect protection structure may be designed so that the left end 612a of the insulating tube 612 is smaller in diameter than the right end 611b of the insulating tube 611, and so that the right end 611b defines the distance d.

Also, regarding the disconnect protection structure shown in FIG. 7, the number of insulating tube units may be increased if necessary due to design parameters such as the length of the crossover 60. For example, a left end of an insulating tube unit that has the same diameter as the insulating tube 611 may be set in the right end 612b of the insulating tube 612.

As should now be appreciated, the above discussed disconnect protection structure is formed by a protection tube that covers a crossover, which in turn connects a rotary transformer output winding and resolver excitation windings. The insulating tube has outer ends that are secured to the resolver and thermal expansion coefficient absorption means that absorbs the difference between the thermal expansion coefficients of the crossover and the insulating tube. Therefore, even when both ends of the insulating tube are obstructed with varnish applied during impregnation processing of the rotary transformer output winding and resolver excitation windings for insulation treatment purposes, the resulting resolver has high associated reliability. In addition, even if the diameters of the resolver excitation windings that become the crossover of the resolver are narrow, the resolver excitation windings can be easily secured to the rotary shaft to improve performance and to protect soldered portions of the crossover housed therein from exposure to ambient operating conditions.

Further, by dividing the insulating tube into spaced insulating tube units, or by designing the insulating tube units so that respective adjacent ends thereof mutually overlap, the crossover is not exposed to ambient conditions, dielectric strength improves, and performance also improves with respect to moisture resistance.

Alternatively, if the disconnect protection structure is formed by forming a cutout portion on a single insulating tube that absorbs the difference in the thermal expansion coefficients between the crossover and the insulating tube, and particularly by forming a cutout portion that absorbs the difference in the thermal expansion coefficients of the crossover and the insulating tube caused by temperature changes, the resolver assembly is simplified, as it becomes easy to pass the crossover through the insulating tube.

This disclosure is intended to explain how to fashion and use various embodiments in accordance with the invention rather than to limit the true, intended, and fair scope and spirit thereof. The foregoing description is not intended to be exhaustive or to limit the invention to the precise form disclosed. Modifications or variations are possible in light of the above teachings. The embodiment(s) was chosen and described to provide the best illustration of the principles of the invention and its practical application, and to enable one of ordinary skill in the art to utilize the invention in various embodiments and with various modifications as are suited to the particular use contemplated. All such modifications and variations are within the scope of the invention as determined by the appended claims, as may be amended during the pendency of this application for patent, and all equivalents thereof, when interpreted in accordance with the breadth to which they are fairly, legally, and equitably entitled.

## Claims

1. In a rotary transformer type resolver having an inner core on which a rotary transformer output winding is wound and a resolver rotor on which resolver excitation windings are wound, a disconnect protection structure for a crossover that connects the rotary transformer output winding and the resolver excitation windings, the disconnect protection structure comprising:
an insulating tube that covers the crossover and that has outermost ends secured to the crossover; and
thermal expansion coefficient absorption means for absorbing a difference between thermal expansion coefficients of the crossover and the insulating tube to thereby inhibit disconnection of the crossover from the rotary transformer output winding and the resolver excitation windings.

2. The disconnect protection structure of claim 1, wherein the insulating tube is separated into a plurality of insulating tube units, and
wherein only a leftmost end of an outer left insulating tube unit and a rightmost end of an outer right insulating tube unit are respectively secured to the crossover.

3. The disconnect protection structure of claim 2, wherein the thermal expansion coefficient absorption means comprises the plurality of insulating tube units and a predetermined gap defined between adjacent ones of the plurality of insulating tube units, the plurality of insulating tube units thereby being capable of expanding or contracting in response to temperature changes.

4. The disconnect protection structure of claim 2, wherein the thermal expansion coefficient absorption means comprises adjacent overlapping ends of the plurality of insulating tube units.

5. The disconnect protection structure of claim 1, wherein the thermal expansion coefficient absorption means comprises at least one cutout portion formed on the insulating tube.

6. The disconnect protection structure of claim 5, wherein the insulating tube is bent to define an elbow, and the cutout portion is located at the elbow.

7. A disconnect protection structure for housing a rotary transformer type resolver crossover, comprising:
an insulating tube that covers the crossover and that has outermost ends secured to the crossover, wherein
the insulating tube is divided into a plurality of insulating tube units to enable the insulating tube units to absorb a difference between thermal expansion coefficients of the crossover and the insulating tube and to thereby inhibit disconnection of the crossover.

8. The disconnect protection structure of claim 7, wherein adjacent ones of the plurality of insulating tube units are separated by a predetermined space to enable the plurality of insulating tube units to expand or contract in response to temperature changes to absorb the difference between the thermal expansion coefficients of the crossover and the insulating tube and to thereby inhibit the disconnection of the crossover.

9. The disconnect protection structure of claim 7, wherein adjacent ends of the plurality of insulating tube units overlap one another over a predetermined distance, the predetermined distance changing in response to shifting of the plurality of insulating tube units relative to one another due to temperature changes.

10. The disconnect protection structure of claim 7, wherein a first one of the plurality of insulating tube units has a first diameter that defines a predetermined distance, and a second tapered diameter that is smaller than the first diameter, a second one of the plurality of insulating tube units being set into the first one of the plurality of tube units by a distance no greater than the predetermined distance to enable the plurality of insulating tube units to shift relative to one another in response to temperature changes.

11. A disconnect protection structure for housing a rotary transformer type resolver crossover, comprising:
a unitary insulating tube that covers the crossover and that has outermost ends secured to the crossover; and
a disconnect stress absorbing cutout portion formed on the unitary insulating tube for absorbing a difference between thermal expansion coefficients of the crossover and the unitary insulating tube to thereby inhibit disconnection of the crossover.

12. The disconnect protection structure of claim 11, wherein ends of the unitary insulating tube are respectively secured to the crossover.

13. The disconnect protection structure of claim 11, wherein the unitary insulating tube is bent to define an elbow, and the disconnect stress absorbing cutout portion is located at the elbow.

14. The disconnect protection structure of claim 11, further comprising at least one additional disconnect stress absorbing cutout portion formed on the unitary insulating tube.
